# EUROPEAN PATENT SPECIFICATION

(11) **EP 2 678 247 B1**
(45) Date of publication and mention of the grant of the patent: **16.12.2015**
(21) Application number: 12717805.1
(22) Date of filing: 27.02.2012
(51) Int. Cl.: B65D 81/26

(54) **CONTAINERS HAVING EMBEDDED MICRO-POROUS PARTICLES**
BEHÄLTER MIT EINGEBETTETEN MIKROPORÖSEN PARTIKELN
CONTENANTS COMPRENANT DES PARTICULES MICROPOREUSES INCORPORÉES

(30) Priority: 25.02.2011 GB 201103287
(43) Date of publication of application: 01.01.2014
(73) Proprietor: Agri-Tech Global Technologies Limited, Kent CT21 4LX (GB)
(72) Inventor: DREW, Bruce Michael, Great Dumow Essex CM6 1DT (GB)
(74) Representative: Wightman, David Alexander
(86) International application number: PCT/GB2012/050442
(87) International publication number: WO 2012/114130

(56) References cited:
- EP-A1- 1 118 551
- EP-A1- 1 211 193
- EP-A1- 1 298 072
- WO-A1-2007/012848
- US-A1- 2004 156 918
- US-A1- 2009 045 095

## Description

This invention relates to improvements in or relating to containers and polymeric substrates having embedded micro-porous particles. Such containers may be used amongst other purposes for storage of fresh produce and other food products. The invention has particular, but not exclusive, application to containers made of polymeric material. Containers may be flexible, for example pouches or bags made substantially of polymeric film materials, or they may be rigid or semi-rigid, for example trays, made substantially of polymeric sheet materials.

Polymeric materials have been used for many years to produce trays. In this application, the term "tray" is taken to mean any container produced from polymeric sheet materials by thermoforming. The tray may be transparent, either clear or lightly tinted, in order to allow the user or consumer to view the contents, or it may be rendered opaque by the inclusion of pigments by means of a masterbatch or otherwise. Among the uses of trays made from polymeric materials is the storage and presentation of fresh produce in retail or wholesale store.

The term "fresh produce" in this specification comprises any fresh or processed food item that respires, including, for the avoidance of doubt, fresh fruit and vegetables and diced and/or processed versions thereof, bakery produce, dairy produce, fresh and cooked meats, fresh and cooked marine and freshwater produce, cut flowers and potted plants. The temperature of the contents during storage within the container can typically vary between -20°C (for example, as found in a freezer) and +35°C (for example, as found as ambient temperature).

The reduction of fresh produce waste has gained increasing importance in recent years due to many concerns:
global warming, carbon footprint, and hence energy consumption,
a more equitable distribution of available food within the world, and
concerns about the disposal of both food and packaging waste.

The introduction of "sell by", "display until", and "best before" dates which have been introduced in the interests of public health has led to a dramatic increase of fresh produce waste by growers, by supermarket chains, by individual supermarket stores and by consumers at home. Any development which can lead to a reduction in the quantity of fresh produce waste is increasingly likely to be well received. As examples of the size of fresh produce waste, it has been estimated that each British adult wastes £450 per annum on fresh produce, and that the largest category of waste for the UK as a whole is fresh fruit and vegetables at 1,360,000 tonnes per annum (2009 figures). As of the date of this application, fresh fruit and vegetables are estimated to make up 25% by weight of the total avoidable household waste and bakery products are estimated to account for a further 13%. For every tonne of food waste avoided, the world will save 4.5 tonnes of carbon dioxide equivalent.

Food waste can have a dramatically varied impact, depending on the amount produced and how it is dealt with; in some countries, the amount of food waste is negligible and has little impact. However, in countries such as the US and the UK, food scrap is estimated to represent around 19 percent of the waste dumped in landfills, where it ends up rotting and producing methane, a greenhouse gas. The social, economic and environmental impact of food wastage is enormous. In the UK, 6.7 million tonnes per year of wasted food (purchased, edible food which is discarded) amounts to a cost of £10.2 billion each year. This translates into a cost of £250 to £400 a year for every British household. A study by the University of Arizona in 2004, indicated that 14-15 per cent of US edible food is untouched or unopened, amounting to $43 billion worth of discarded, but edible, food.

EP-A-1211193, EP-A-1298072, EP-A-118551 disclose packaging made of plastics material for food products according to the preamble of claim 1. Other examples of packaging for food products are disclosed in WO-A-2007/012848, US-A-2009/0045095, US-A-2004/0156918.

The present invention concerns improvements in or relating to containers for the storage of fresh produce. More particularly, but not exclusively, a desired aim of the invention is to improve the permeability and/or compostability or degradability of containers for the storage of fresh produce. These and other aims and benefits of the invention will be more fully understood from the following description.

In a first aspect, the present invention concerns a thermoformed container as defined in claim 1. Optional features of the container are the subject of claims 2 to 11.

It may be that an external surface of the container is smooth to the touch. It may be that the container is formed from a thermoformable polymeric sheet material having the micro-porous particles embedded therein. The surfaces of the sheet material may be smooth to the touch prior to thermoforming. During thermoforming the sheet material reduces in thickness with the result that the embedded particles project from the internal surface of the formed container. Suitable sheet materials may have a thickness (prior to thermoforming) in the range 100 to 1000 microns and the embedded particles may range in size from 30 to 200 microns, more preferably from 30 to 100 microns. It may be that the micro-porous particles are micro-porous mineral particles.

It will be evident that measurement of the thickness of any part of a thermoformed tray or extruded substrate which exhibits the presence of embedded particles projecting from one or more of its surface cannot be reliably determined in the usual way, for example, by means of a micrometer. In this description, any reference to the thickness of a thermoformed tray or extruded substrate exhibiting the presence of protruding particles should be taken to mean the thickness of a notional tray or substrate identical in all respects except that the protruding particles would no longer be present.

When thermoforming the polymeric sheet in which the micro-porous mineral particles are embedded, the sheet is drawn into a mould by vacuum from below or pressure from above, or both. The polymeric sheet may be heated to increase its plasticity prior to thermoforming. As the sheet is drawn into the mould, the walls and base of the tray are thinned as the polymeric material is stretched, in comparison with, for example, the rim of the tray which may not be subjected to thermoforming. Typically, after thermofoming, the corners at the base of the tray become its thinnest part followed by the walls and base of the container.

The consequence of the particle size is that the internal surface, in particular, of the thermoformed containers made substantially from polymeric material are rough to the touch and the presence of particles can clearly be seen and felt in the walls and/or base of the container due to the thinning of these parts during thermoforming. In the case of a thermoformed tray where the polymeric material sheet has been plasticised by heat and then drawn into the mould, the presence of particles can be particularly seen and felt on the internal surface of the tray.

Thus, as the plasticised sheet is being tightly drawn against the surface of the mould which may be smooth and highly polished, the micro-porous particles, whilst remaining embedded within the thinned sheet, are displaced from a random position within the sheet prior to thermoforming to an asymmetric position in which the surface area of the embedded particles projecting within the container is significantly greater than the surface area of the embedded particles projecting without the container. In some embodiments, the embedded particles may project within the container only. In this way the external surface of the container may be smooth to the touch.

It will be noted that the particles, although now asymmetrically disposed within the thinned sheet, are still embedded within the polymeric material which provides a covering to each projecting particle. This asymmetry has important consequences for the performance of the tray as it provides an increased surface area of micro-porous mineral particles on the inner surface of the tray. The covering of polymeric material may only be thin, for example several microns thick, so that the particles are exposed to the contents of the tray through the covering, thus allowing enhanced breathability and accelerated absorption. In turn, this increases the performance of the tray for storing and presenting fresh produce due to enhanced breathability and accelerated absorption of, for example, ethylene and/or moisture.

The tray may be closed by a variety of means. The closure may comprise a lid typically made from the same polymeric material as the tray which clips, or is otherwise secured, to the tray sufficiently tightly for the lid not to be inadvertently separated from the base. The closure may comprise an integrally thermoformed hinged lid which is formed simultaneously with the tray to produce what is often known as a clam-shell pack. The closure may comprise a polymeric filmic lid which is heat sealed or otherwise secured to the tray, preferably by a peelable seal such that the consumer may easily open the container by peeling back the filmic lid.

Trays can be made from many different polymeric sheet materials including petroleum based polymers such as polyester, polyethylene, polypropylene, polystyrene, and polyvinyl chloride, and bio-polymers containing a greater or lesser content of renewable raw materials derived from plant sources, sometimes known as biomass.

The choice of polymeric sheet material for any particular application will depend upon the characteristics required, including, although the list is by no means limiting, transparency, barrier properties, thermoformability, transmission of odour or taste from the polymeric sheet material into the contents of the tray (to produce what is known as taint), ease of disposal, and cost.

The choice of micro-porous mineral particles for any particular application will depend on the characteristics required. For food packaging applications, the mineral particles may comprise zeolites such as clinoptilolite, bentonite, diatomite or other mineral particles.

Suitable sheet materials may have a thickness in the range 100 to 1000 microns and the embedded particles may range in size from 30 to 200 microns, more preferably from 30 to 100 microns.

If the tray is to contain fresh produce, it may be necessary to perforate either the tray or the lid or both. Typically, the surface area of the perforation(s) represents between 0.0002 and 0.0012% of the combined surface area of the tray and lid.

The container can comprise a single compartment or multiple compartments.

The polymeric materials of the containers which are -the subject of the present invention comprise particularly, but not exclusively, petroleum based substrates on the one hand and compostable substrates on the other hand.

The term "petroleum based polymers" within this application comprises all polymeric substrates derived from petroleum which may be used to produce containers as defined above.

The term "polyester" in this application includes all forms of polyethylene terephthalate (PET) including therefore amorphous PET (APET), crystalline PET (CPET), recycled PET (RPET), and copolymer PET (PETG), although these forms of PET are by no means limiting.

The term "compostable" within this specification comprises all polymeric materials which are capable of undergoing biological decomposition in a composting site as part of a controlled composting programme, such that the polymeric material is not thereafter visually distinguishable within the compost, having broken down to carbon dioxide, water, non-hazardous inorganic compounds, and biomass, at a rate consistent with known compostable materials and leaving no toxic residue.

Compostable materials are typically certified to conform to international norms such as:
American Society for Testing and Materials ASTM-6400-99
European Standardization Committee (CEN) EN13432
International Standards Organization (ISO) ISO14855 (only for biodegradation) German Institute for Standardization DIN) DIN V49000
ASTM, CEN and DIN standards specify the criteria for biodegradation, disintegration and eco-toxicity for a polymeric material to be certified as compostable.

Certification to comply with, for example, EN13432 is dependent, amongst other things, upon the thickness of the material being tested. Typically, polymeric substrates of thicknesses up to 60µm obtain certification to comply with international norms such as EN13432. It will be evident that for production of thermoformed trays, sheets of greater thickness, typically between 350µm and 800µm, are required depending upon the draw depth of the tray during thermoforming. For the avoidance of doubt, if a material has been certified to comply with EN13432 at any thickness, then in this application it will be considered to fall within the term "compostable", even at greater thicknesses than that which obtained certification to comply with EN13432.

The term "degradable" within this specification comprises polymeric materials which undergo a significant change in their physical and chemical structure under specific environmental conditions resulting in a loss of some properties. Note that there is no requirement that the polymeric material has to be degraded by the action of naturally occurring micro-organisms or any of the other criteria required for compostable plastics, neither is it necessary for the "degraded" polymeric material to become visually indistinguishable.

In addition to enhancing the breathability of containers made substantially from polymeric materials, it has been found that the micro-porous mineral particles of this invention assist compostable polymeric materials to compost more quickly, and degradable polymeric materials to degrade more quickly, as a result of enhancing permeability of the polymeric materials via the pathways which are created within the polymeric materials by the presence of micro-porous mineral particles.

The accelerated rate of compostability may be practised in the form of thermoformed containers or in the form of flexible substrates according to any of the aspects of the invention described herein.

It will be appreciated that in the form of extruded flexible substrates, the particles will be dispersed randomly within the flexible substrate and that both surfaces of the flexible substrate will therefore be equally rough to the touch. However, as in the case of thermoformed containers, the particles, although disposed randomly within the substrate, will always have a covering of polymeric material which may be thin, for example several microns thick, so that the particles are exposed to the surroundings through the covering.

The incorporation of an anti-microbial coating within the container has been found to enhance the shelf life of fresh produce packed within the container still further. A preferred feature of the anti-microbial coating material is an absence of subsequent taint of the fresh produce packed within the container.

The coating may be applied to the polymeric substrate before or after conversion into containers as a wash coating, a strip coating or as printed matter. All the components within the coating should be food contact approved, including particularly the binder and the anti-microbial agent. The binder may be an acrylic resin soluble in ethanol, or in mixtures of ethanol and other solvents, and the anti-microbial agent can be selected from food preservatives approved for use by EU (E-numbers) or USA (GRAS - Generally Regarded As Safe) regulations. Among anti-microbial agents showing anti-microbial activity in such coatings are E-numbers E200-299 and more especially E-numbers 200-209
200-209 sorbates
210-219 benzoates
220-229 sulphites
230-239 phenols & formates (methanoates)
240-259 nitrates
260-269 acetates (ethanoates)
270-279 lactates
280-289 propionates (propanoates)
290-299 Others

In one embodiment, we have obtained especially promising results by including in the coating a synthetic micro-porous zeolite of particle size less than 25 microns, preferably less than 10 microns and more preferably in the range 3 to 5 microns. The coating may have a thickness in the range 2 to 10 microns and more preferably 2 to 5 microns, although particles may protrude from the surface of the coating. The inclusion of a synthetic zeolite in the coating can provide further life extension properties to certain types of fresh produce packed within the container. The synthetic micro-porous zeolite is not to be confused with the micro-porous mineral particles which are embedded in the polymeric material comprising the tray or flexible substrate itself.

The anti-microbial coating can be applied to a component part of the container such as the internal surface of a lidding film or an internal surface of a tray or the internal surface of a flexible pouch. Alternatively, the coating may be included within a container by means of a separate substrate which, as an example only, may comprise a self-adhesive label or bubble pad which has itself been coated with an anti-microbial coating. The bubble pad may be attached to an internal surface of the container by an adhesive.

The surface area of the anti-microbial coating may vary according to the nature of the fresh produce within the container and the anticipated microbial incidence. The area of anti-microbial coating within the container can vary between 1% and 100% of the internal surface area of the container, especially between 5% and 50%, and more especially between 2.5% and 25%.

The anti-microbial coating material for use within containers for storage of fresh produce may be made by mixing together a first preparation containing an anti-microbial agent approved for food contact under the appropriate legislation, and a second preparation containing a resin binder similarly approved for food contact. Where advantageous, an absorbent material may be included in the second preparation in order to provide an adsorbent capacity to the coating, for example a synthetic zeolite of particle size up to 25 microns, measured according to EN21524, may be employed.

The particle size of the synthetic zeolite may be chosen so that the synthetic zeolite forms a stable suspension (after agitation) in the coating during the application of the coating to the container or to the substrate destined for insertion within the container. In order to achieve the best results, it is preferred to minimise the use of water as a component of the solvent mixture in both the first and the second preparations. Once the first and second preparations have been independently prepared, the two preparations can be mixed together in appropriate proportions to provide a coating which may be applied by conventional means.

In another aspect, the present invention concerns a method of making a thermoformed container as defined in claim 12. Optional features of the method are the subject of claims 13 to 15.

Preferably, the micro-porous particles project from an internal surface of the container. An external surface of the container may be smooth to the touch.

Preferably, the polymeric material provides a covering for the particles where they project from the surface of the container. The covering may be thin, for example up to several microns thick.

Preferably, the container has a base and side walls and the thickness of the sheet is reduced in areas forming its side walls and base.

Preferably, the surface area of covered particles projecting from the surface of the container is greater on the inside of the container than on the outside of the container. In some embodiments, the particles may project on the inside of the container only.

Optionally, the container is provided with an anti-microbial material.

The materials employed for the container, micro-porous particles and, where provided, anti-microbial material, may comprise any of the materials described in connection with the first and second aspects of the invention.

Suitable compostable or degradable materials may be provided by any of the materials described in connection with the preceding aspects of the invention.

Suitable micro-porous particles may be provided by any of the materials described in connection with the preceding aspects of the invention.

The container may be provided with an anti-microbial material. Suitable anti-microbial materials may be provided by any of the materials described in connection with the preceding aspects of the invention and may be provided in the form of a coating on the container and/or on a substrate within the container.

The invention will now be illustrated by way of example only with reference to the accompanying drawings wherein:
**Figure 1** shows a polymeric sheet having micro-porous mineral particles embedded therein;
**Figure 2** shows thermoforming the polymeric sheet of Figure 1 within a smooth mould to form a tray;
**Figure 3** shows the tray produced by thermoforming the polymeric sheet of Figure 1;
**Figure 4** shows the tray of Figure 3 containing fresh produce and a lid attached;
**Figure 5** shows the tray of Figure 4 with a substrate on the base provided with an antimicrobial coating on its upper or lower surface;
**Figure 6** shows the tray of Figure 4 with an antimicrobial coating either directly on the underside of the lid or on a self-adhesive label which is affixed to the lid.
**Figure 7** shows a polymeric film having micro-porous mineral particles embedded therein;
**Figure 8** shows use of the polymeric film of Figure 7 as a lidding film for a tray; and
**Figure 9** shows use of the polymeric film of Figure 7 as a wrapping film for a tray.

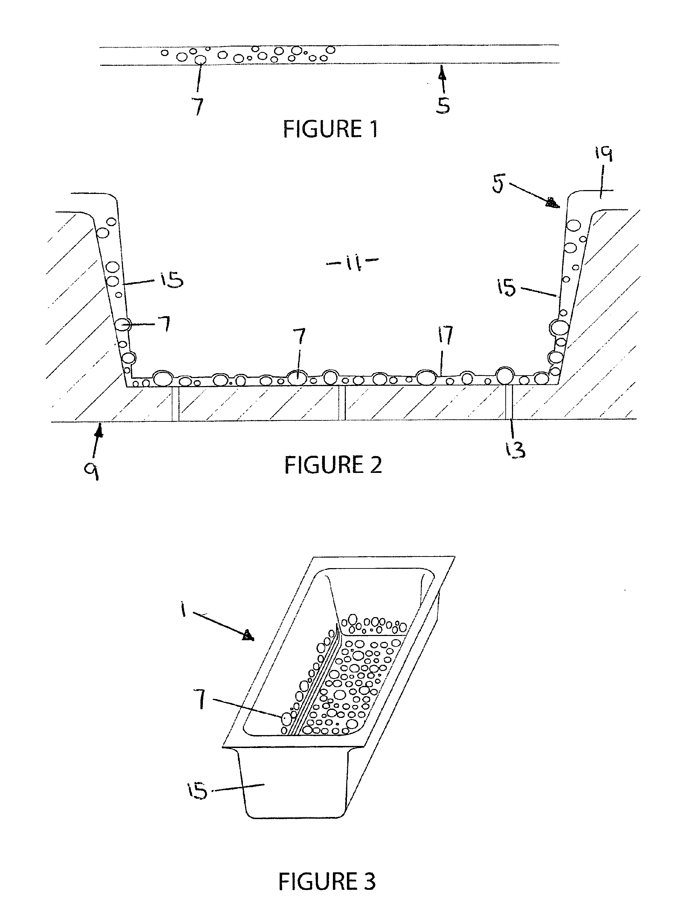

Referring first to Figures 1 to 4 of the drawings, a thermoformed tray 1 for fresh produce 3 such as strawberries is thermoformed from a sheet 5 of polymeric material having micro-porous mineral particles 7 embedded therein. The sheet 5 may comprise petroleum based polymers, compostable polymers or degradable polymers as described previously. Petroleum based polymers, include but are not limited to polyester, polyethylene, polypropylene, polystyrene, and polyvinyl chloride, and bio-polymers containing a greater or lesser content of renewable raw materials derived from plant sources, sometimes known as biomass. The choice of polymer material for any particular application may depend upon the characteristics required, including, but not limited to, transparency, barrier properties, thermoformability, transmission of odour or taste from the polymer into the contents of the tray (to produce what is known as taint), ease of disposal, and cost. The micro-porous mineral particles 7 may comprise zeolites such as clinoptilolite, bentonite, diatomite or other mineral particles suitable for inclusion in food packaging applications. The choice of micro-porous mineral particles for any particular application may depend on the particular atmosphere within the container which offers optimum storage life to the contents of the container.

As shown in Figure 1, the thickness of the sheet 5 prior to thermoforming is such that the micro-porous particles 7 are embedded completely within the polymeric material of the sheet 5 such that the presence of the particles 7 may not be readily apparent and the surfaces of the sheet 5 may be substantially smooth to the touch. The particles 7 may be of uniform size or non-uniform size and may be of regular shape or irregular shape. The sheet 5 may contain particles 7 of the same or different materials, for example a mixture of particles 7 of different materials. The particles 7 may be provided throughout the sheet 5. Alternatively, the particles 7 may be provided in one or more selected areas of the sheet 5. The or each selected area may be chosen so that the particles 7 are provided in a particular area of the tray 1. The loading of particles 7 may provide a uniform or non-uniform distribution of the particles 7 throughout the sheet 5 or in the or each selected area. The thickness of the sheet 5 and size of particles 7 may vary according to requirements. By way of example, the sheet 5 may have a thickness in the range 100 to 1000 microns and the particles 7 may have a size in the range 30 to 200 microns. The particle size may vary as shown.

Figure 2 shows thermoforming the sheet 5 in a mould 9 to form the tray 1. The mould 9 has a recess 11 corresponding to the finished shape of the tray 1 and the sheet 5 is drawn into the mould 9 by applying a vacuum from below via holes 13 in selected areas of the mould 9, typically in the bottom of the recess 11. Alternatively or additionally, pressure may be applied to the sheet 5 from above.. The sheet 5 may be heated to increase its plasticity prior to thermoforming. The mould 9 may be heated to assist thermoforming of the sheet 5. As the sheet 5 is drawn into the mould, the sheet 5 is thinned as the polymeric material is stretched in areas forming side walls 15 and base 17 of the tray 1 in comparison with, for example, areas forming a rim 19 of the tray 1 which may not be subjected to thermoforming. Typically, after thermofoming, the side walls 15 and base 17 of the tray 1 are of reduced thickness in comparison with the thickness of the sheet 5 prior to thermoforming and the thinnest part of the tray 1 may be at the corners between the side walls 15 and base 17. As shown, the base 17 of the tray 1 may be of uniform thickness and side walls 15 of the tray may increase in thickness from the base 17 to the rim 19 of the tray 1.

Figure 3 shows the thermoformed tray 1. The tray 1 may be of rectangular shape in plan view or any other suitable shape. The tray may be rigid or semi-rigid. The tray may be self-supporting. The reduction in thickness of the sheet 5 during thermoforming is such that at least some of the particles 7 embedded in areas of the sheet 5 forming the base 17 and at least lower regions of the side walls 15 are no longer contained wholly within the thickness of the sheet 5 and project at least partially from the surface of the tray 1 such that the presence of particles 7 can clearly be seen and felt due to the thinning of these parts during thermoforming. More especially, during the thermoforming process the sheet 5 is tightly drawn against the surface of the mould 9 which may be smooth and highly polished. As a result, the micro-porous particles 7, whilst remaining embedded within the thinned sheet 5, are preferably displaced towards the interior of the tray 1 from a random position within the thickness of sheet 5 prior to thermoforming to an asymmetric position in which the surface area of the embedded particles 7 projecting from the side walls 15 and base 17 on the inside of the tray 1 is significantly greater than the surface area of the embedded particles 7 projecting from the side walls walls 15 and base 17 on the outside of the tray 1. In preferred embodiments, the particles 7 may project on the inner surface of the tray only. The outer surface of the tray 1 may thus be smooth to the touch. This asymmetry provides an increased surface area of micro-porous mineral particles 7 on the inner surface of the tray 1. The polymeric material of the tray 1 provides a covering for the particles 7 where they project from the surface of the tray 1. The covering may be thin, for example of the order of several microns only so that the particles 7 are exposed to the contents of the tray 1 through the covering allowing accelerated absorption. In turn, this increases the performance of the tray 1 for storing and presenting fresh produce due to accelerated absorption of, for example, ethylene and moisture. In addition to enhancing the breathability of the tray 1, it has been found that the micro-porous mineral particles 7 may assist composting when the tray 1 is made of compostable polymeric materials, and degrading when the tray 1 is made of degradable polymeric materials, as a result of the pathways which are created within the polymeric materials by the presence of embedded micro-porous mineral particles 7.

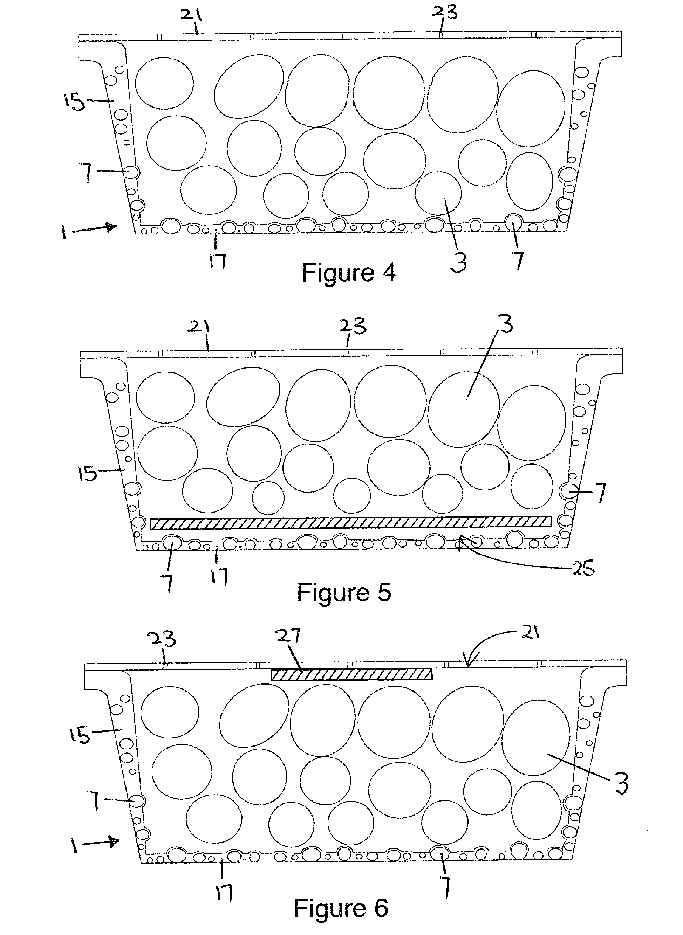

Figure 4 shows the tray 1 containing fresh produce 3 such as strawberries and closed by a lid 21. The lid 21 may comprise a film of polymeric material which can be sealed to the rim 19 of the tray 1 for example by heat or by adhesive, preferably by a peelable seal such that the consumer may easily open the tray 1 by peeling back the lid 21. Attaching the lid 21 to the rim 19 may be faciliated because the polymeric material of the sheet 5 forming the rim 19 was not thinned to any appreciable extent during the thermoforming process with the result that the particles 7 remain within the thickness of the sheet 5 and the surface of the rim 19 is smooth for attaching the lidding film. Other means (not shown) of closing the tray 1 may be employed. For example, a lid typically made from the same polymeric material as the tray 1 which may be formed separately and clips, or is otherwise secured, to the tray 1 sufficiently tightly for the lid not to be inadvertently separated from the tray 1. Alternatively, a hinged lid may be integrally thermoformed simultaneously with the tray 1 to produce what is often known as a clam-shell pack. Where a separate or integral lid 21 is provided, it may not be necessary for the particles 7 to remain within the thickness of the sheet 5 in the area forming the rim 19. Whatever form of lid is employed, the lid 21 and/or tray 1 may be provided with perforations 23.

Figures 5 and 6 show modifications in which the tray 1 and/or lid 21 is provided with an anti-microbial material. The incorporation of an anti-microbial material has been found to enhance the shelf life of fresh produce packed within the tray 1 still further. The anti-microbial material may be provided as a coating on an internal surface of the tray 1 and/or lid 21. Alternatively or additionally, a separate substrate may be provided that is coated with the anti-microbial material. Such substrate may be provided loose within the tray 1 or may be attached to an interior surface of the tray 1 and/or lid 21. Figure 5 shows a substrate 25 having a coating of anti-microbial material on its upper or lower surface provided within the tray 1, typically in the form of a bubble pad or mat at the bottom of the tray 1. Figure 6 shows a coating 27 of anti-microbial material provided on the underside of the lid 21 or on a substrate attached to the lid 21 such as self-adhesive label. The surface area of the anti-microbial coating may vary according to the nature of the fresh produce and the anticipated microbial incidence. The surface area of the anti-microbial coating can vary between 1% and 100% of the internal surface area of the tray 1 and lid 21, especially between 5% and 50%, and more especially between 2.5% and 25%.

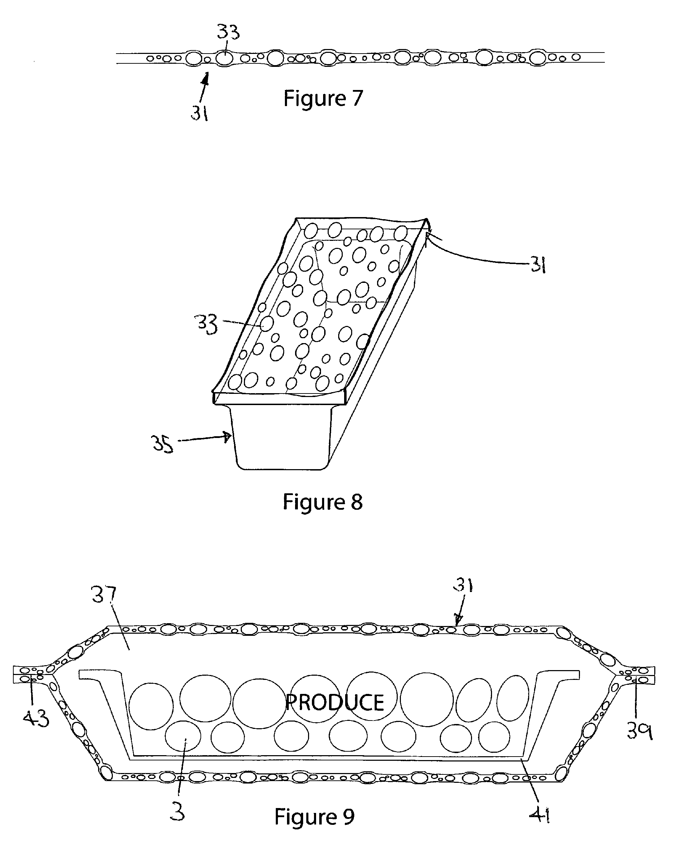

Figure 7 shows an extruded compostable or degradable flexible polymeric substrate 31 of thickness between 10 and 100 microns more preferably between 15 and 50 microns containing embedded micro-porous particles 33 of size between 15 and 150 microns more preferably between 35 and 95 microns, all of which exhibit a covering of the polymeric material of several microns thickness. The particles 33 may be introduced into the extruded substrate 31 by means of a masterbatch. Due to the method of manufacture by extrusion, the particles 33 will be randomly dispersed throughout the substrate 31 and hence both surfaces of the substrate 31 will be rough to the touch. Such a substrate 31 can be converted into different forms of flexible container such as side-sealed or bottom sealed bags or whilst being filled on vertical or horizontal form fill seal machines including flow wrappers.

Figure 8 illustrates an example of how the flexible substrate 31 of Figure 7 may find application as a lidding film for a tray 35. The tray 35 may be as shown in Figures 1 to 4. The flexible compostable or degradable lidding film 31 preferably has a thickness of between 15 and 30 microns. It may be preferable for the tray 35 to which the flexible film 31 is attached to be made from a compostable or degradable polymeric material in order that both components are similarly compostable or degradable. The lidding film 31 and tray 35 may be made from the same or different materials.

Figure 9 illustrates a further example of how the flexible substrate 31 of Figure 7 may find application in flow wrapping. In this example, the flexible compostable or degradable substrate 31 is converted into a pouch 37 by first converting the substrate 31 into a tube by means of a longitudinal heat seal and then making a first transverse seal 39, inserting a filled tray 41 into the open pouch 37 and then closing the pouch 37 with a second transverse heat seal 43. The tray 41 may be as shown in Figures 1 to 4. The flexible compostable or degradable pouch substrate 31 preferably has a thickness of between 15 and 30 microns. It may be preferable for the tray 41 to be made from a compostable or degradable polymeric material in order that both components are similarly compostable or degradable. The pouch substrate 31 and tray 41 may be made from the same or different materials.

The flexible polymeric substrate 31 in Figures 7 to 9 may be provided with anti-microbial material. The anti-microbial material may be applied as a coating to the substrate 31 or in a label or printing applied to the substrate. Where the flexible polymeric substrate 31 is used to form a pouch or bag, the anti-microbial material may be applied to a separate substrate that is inserted into the pouch.

The anti-microbial coating material for storage of fresh produce using any of the containers or packaging described herein may be made by mixing together a first preparation containing an anti-microbial agent approved for food contact under the appropriate legislation, and a second preparation containing a resin binder similarly approved for food contact. Where advantageous, a synthetic zeolite may be included in the second preparation in order to provide the coating with an adsorbent capacity.

Examples of coatings which have provided successful performance are shown below.

### EXAMPLE 1

| | |
|---|---|
| First Preparation: | 13.2g of potassium sorbate was dissolved in 47.0g of 60% ethanol solution in water. |
| Second Preparation: | 30.0g of NeoCryl B-819® acrylic beads were dissolved in 95.0g of 95% ethanol and 50.4g of ethyl acetate. |

The two preparations were shaken together to form a coating composition.

### EXAMPLE 2

| | |
|---|---|
| First Preparation: | 12.0g of sorbic acid was dissolved in 108.0g of 95% ethanol. |
| Second Preparation: | 42.7g of NeoCryl B-819® acrylic beads were dissolved in 120.0g of 95% ethanol. |

The two preparations were shaken together to form a coating composition.

### EXAMPLE 3

| | |
|---|---|
| First Preparation: | 16.0g of sorbic acid and 26.1g of potassium sorbate were dissolved in 280.0g of 50% ethanol solution in water. |
| Second Preparation: | 42.7g of NeoCryl B-819® acrylic beads were dissolved in 120.0g of 95% ethanol. |

The two preparations were shaken together to form a coating composition.

### EXAMPLE 4

The First and Second Preparations were prepared as in Example 1 above. An amount of synthetic zeolite Sylosiv A10® of particle size between 3 and 5 microns, equal to 50% of the weight of the First Preparation, was added to the First Preparation and thoroughly dispersed before the Second Preparation was added and the two preparations shaken together to form a coating composition.

### EXAMPLE 5

The First and Second Preparations were prepared as in Example 2 above. An amount of synthetic zeolite Sylosiv A10® of particle size between 3 and 5 microns, equal to 50% of the weight of the First Preparation, was added to the First Preparation and thoroughly dispersed before the Second Preparation was added and the two preparations shaken together to form a coating composition.

### EXAMPLE 6

The First and Second Preparations were prepared as in Example 3 above. An amount of synthetic zeolite Sylosiv A10® of particle size between 3 and 5 microns, equal to 50% of the weight of the First Preparation, was added to the First Preparation and thoroughly dispersed before the Second Preparation was added and the two preparations shaken together to form a coating composition.

While particular, features, methods and applications of the present invention have been shown and described herein, it will be understood, that the scope of the disclosure is not limited thereto. Thus, for example, in any of the embodiments disclosed herein, components or elements of any feature, method or application may be employed separately or in any combination and all possible combinations and subcombinations are intended to fall within the scope of this disclosure and the invention extends to all modifications falling within the scope of the claims.

## Claims

1. A thermoformed container (1) made substantially from polymeric material having embedded therein micro-porous particles (7) **characterised in that** the polymeric material has embedded microus particles (7) of a size greater than the thickness of the thermoformed polymeric material at its thinnest part such that at least part of an internal surface of containers (1) made from the substantially polymeric material is rough to the touch and the presence of embedded particles (7) can be seen and felt.

2. A container according to claim 1 made from a petroleum based polymeric substrate.

3. A container according to claim 2 made from a polyester substrate or a degradable polymeric substrate.

4. A container according to claim 1 made from a compostable substrate.

5. A container according to any preceding claim in which the container is provided with an anti-microbial material.

6. A container according to claim 5 in which the anti-microbial material is provided as a coating (27) on an internal surface of the container or on a separate piece of substrate (25) which is inserted into the container.

7. A container according to any preceding claim in which the container is perforated.

8. A container according to any preceding claim wherein the container has a base (17) and side walls (15) and the micro-porous particles (7) are provided in the base (17) of the container and/or in the side walls (15) of the container.

9. A container according to any preceding claim in which the container is rigid or semi-rigid.

10. A container according to any preceding claim in which the micro-porous particles (7) are micro-porous mineral particles.

11. A container according to any preceding claim in which the container comprises a tray or vessel comprising one or more compartments.

12. A method of making a thermoformed container (1) comprising the steps of:
i) providing a sheet of polymeric material having embedded micro-porous particles (7) contained substantially within the thickness of the sheet, and
ii) thermoforming the sheet to form a container (1),
**characterised in that** the thickness of the sheet is reduced during the thermoforming process such that at least some of the embedded micro-porous particles (7) project from the surface of the container (1).

13. A method according to claim 12 wherein the micro-porous particles (7) project from an internal surface of the container (1).

14. A method according to claim 12 or claim 13 wherein the container (1) has a base (17) and side walls (15) and the thickness of the sheet is reduced in areas forming the base (17).

15. A method according to claim 14 in which the thickness of the sheet is reduced in areas forming the side walls (15).

## Patentansprüche

1. Thermogeformter Behälter (1), der im Wesentlichen aus Polymermaterial mit darin eingebetteten mikroporösen Partikeln (7) gefertigt ist, **dadurch gekennzeichnet, dass** das Polymermaterial mikroporöse Partikel (7) von einer Größe eingebettet hat, die größer als die Dicke des thermogeformten Materials an seinem dünnsten Teil ist, so dass sich mindestens ein Teil einer internen Oberfläche des Behälters (1), der im Wesentlichen aus Polymermaterial gefertigt ist, rau anfühlt und die Präsenz der eingebetteten Partikel (7) sichtbar und spürbar ist.

2. Behälter gemäß Anspruch 1, der aus einem petroleumbasierten Polymersubstrat gefertigt ist.

3. Behälter gemäß Anspruch 2, der aus einem Polyestersubstrat oder einem abbaubaren Polymersubstrat gefertigt ist.

4. Behälter gemäß Anspruch 1, der aus einem kompostierbaren Substrat gefertigt ist.

5. Behälter gemäß einem vorhergehenden Anspruch, wobei für den Behälter ein antimikrobielles Material vorgesehen ist.

6. Behälter gemäß Anspruch 5, wobei das antimikrobielle Material als Beschichtung (27) an einer internen Oberfläche des Behälters oder auf einem separaten Teil eines Substrats (25), das in den Behälter eingeführt ist, vorgesehen ist.

7. Behälter gemäß einem vorhergehenden Anspruch, wobei der Behälter perforiert ist.

8. Behälter gemäß einem vorhergehenden Anspruch, wobei der Behälter eine Basis (17) und Seitenwände (15) besitzt und die mikroporösen Partikel (7) in der Basis (17) des Behälters und/oder in den Seitenwänden (15) des Behälters vorgesehen sind.

9. Behälter gemäß einem vorhergehenden Anspruch, wobei der Behälter steif oder halbsteif ist.

10. Behälter gemäß einem vorhergehenden Anspruch, wobei die mikroporösen Partikel (7) mikroporöse Mineralpartikel sind.

11. Behälter gemäß einem vorhergehenden Anspruch, wobei der Behälter eine Schale oder ein Gefäß beinhaltet, die eine oder mehrere Kammern beinhalten.

12. Verfahren zum Herstellen eines thermogeformten Behälters, wobei das Verfahren die folgenden Schritte beinhaltet:
i) Vorsehen eines Bogens eines Polymermaterials mit eingebetteten mikroporösen Partikeln (7), die im Wesentlichen innerhalb der Dicke des Bogens enthalten sind, und
ii) Thermoformen des Bogens, um einen Behälter (1) zu bilden,
**dadurch gekennzeichnet, dass** die Dicke des Bogens während des Thermoformprozesses derart reduziert wird, dass mindestens einige der eingebetteten mikroporösen Partikel (7) von der Oberfläche des Behälters (1) vorstehen.

13. Verfahren gemäß Anspruch 12, wobei die mikroporösen Partikel (7) von einer internen Oberfläche des Behälters (1) vorstehen.

14. Verfahren gemäß Anspruch 12 oder Anspruch 13, wobei der Behälter (1) eine Basis (17) und Seitenwände (15) besitzt und die Dicke des Bogens in Bereichen reduziert wird, die die Basis (17) bilden.

15. Verfahren gemäß Anspruch 14, wobei die Dicke des Bogens in Bereichen reduziert wird, die die Seitenwände (15) bilden.

## Revendications

1. Récipient thermoformé (1) composé substantiellement de matériau polymérique dans lequel sont noyées des particules microporeuses (7), **caractérisé en ce que** le matériau polymérique comporte des microparticules noyées (7) d'une taille supérieure à l'épaisseur du matériau polymérique thermoformé dans sa partie la plus mince de manière à ce qu'au moins une partie d'une surface interne des récipients (1) composés du matériau substantiellement polymérique soit rugueuse au toucher et que la présence de particules noyées (7) puisse être vue et perçue.

2. Récipient selon la revendication 1, composé de substrat polymérique à base de pétrole.

3. Récipient selon la revendication 2, composé de substrat de polyester ou de substrat polymérique dégradable.

4. Récipient selon la revendication 1, composé de substrat compostable.

5. Récipient selon l'une quelconque des revendications, dans lequel le récipient est pourvu d'un matériau antimicrobien.

6. Récipient selon la revendication 5, dans lequel le matériau antimicrobien se présente sous forme d'un revêtement (27) appliqué sur une surface interne du récipient ou sur un morceau séparé de substrat (25) qui est inséré dans le récipient.

7. Récipient selon l'une quelconque des revendications précédentes, dans lequel le récipient est perforé.

8. Récipient selon l'une quelconque des revendications précédentes, dans lequel le récipient a une base (17) et des parois latérales (15) et les particules microporeuses (7) se trouvent dans la base (17) du récipient et/ou dans les parois latérales (15) du récipient.

9. Récipient selon l'une quelconque des revendications précédentes, dans lequel le récipient est rigide ou semi-rigide.

10. Récipient selon l'une quelconque des revendications précédentes, dans lequel les particules microporeuses (7) sont des particules minérales microporeuses.

11. Récipient selon l'une quelconque des revendications précédentes, dans lequel le récipient comprend un plateau ou une cuve comportant un ou plusieurs compartiments.

12. Procédé de fabrication d'un récipient thermoformé (1) comprenant les étapes de :
i) prévision d'une feuille de matériau polymérique comportant des particules microporeuses noyées (7) contenues substantiellement dans l'épaisseur de la feuille, et
ii) thermoformage de la feuille pour former un récipient (1),
**caractérisé en ce que** l'épaisseur de la feuille est réduite pendant le processus de thermoformage de manière à ce qu'au moins certaines des particules microporeuses noyées (7) soient proéminentes sur la surface du récipient (1).

13. Procédé selon la revendication 12, dans lequel les particules microporeuses (7) sont proéminentes sur une surface interne du récipient (1).

14. Procédé selon la revendication 12 ou la revendication 13, dans lequel le récipient (1) a une base (17) et des parois latérales (15) et l'épaisseur de la feuille est réduite dans les zones formant la base (17).

15. Procédé selon la revendication 14, dans lequel l'épaisseur de la feuille est réduite dans les zones formant les parois latérales (15).
